Europäisches Patentamt

European Patent Office

Office européen des brevets

(19)

(11) **EP 1 335 152 B1**

(12) **EUROPÄISCHE PATENTSCHRIFT**

(45) Veröffentlichungstag und Bekanntmachung des Hinweises auf die Patenterteilung:
**01.06.2005 Patentblatt 2005/22**

(51) Int Cl.$^7$: **F16H 7/08**

(21) Anmeldenummer: **03001850.1**

(22) Anmeldetag: **29.01.2003**

(54) **Kettentrieb**

Chain drive

Entrainement par chaine

(84) Benannte Vertragsstaaten:
**AT BE BG CH CY CZ DE DK EE ES FI FR GB GR HU IE IT LI LU MC NL PT SE SI SK TR**

(30) Priorität: **06.02.2002 DE 10204741**

(43) Veröffentlichungstag der Anmeldung:
**13.08.2003 Patentblatt 2003/33**

(73) Patentinhaber: **EBERT Kettenspanntechnik GmbH**
**04435 Schkeuditz (DE)**

(72) Erfinder:
• **Ebert, Siegfried**
**04435 Schkeuditz (DE)**
• **Meier, Hartmut**
**06779 Schierau OT Möst (DE)**
• **Tanzmann, Horst**
**04157 Leipzig (DE)**
• **Ebert, Frank**
**04435 Schkeuditz (DE)**

(56) Entgegenhaltungen:
**EP-A- 1 006 294        WO-A-01/88410**
**DD-A- 275 166**

## Beschreibung

Die Erfindung betrifft einen Kettentrieb mit einer über ein treibendes Kettenrad und einem getriebenen Kettenrad geführten Endloskette mit ringförmigem Spann- und Dämpfungselement, welches als elastisch verformbares Element zwischen Lostrum und Lasttrum ständig auf beide Trume gleichzeitig wirkt und ellipsenähnlich verformt wird. entsprechend dem Oberbegriff des Anspruchs 1.

Die Erfindung ist anwendbar für Kettentriebe in Brennkraftmaschinen, insbesondere solche mit kleinem Achsabstand der Kettenräder.

Aus der gattungsgemäßen WO 01/88410 A1 ist ein Kettentrieb bekannt geworden, bei dem rotational elastische, auf den Laschen der Kette rollende, paarweise neben den Kettenrädern gegenüberliegende Spann- und Dämpfungselemente angeordnet sind. Die Lagesicherung der Spann- und Dämpfungselemente in den Laschenebenen erfolgt mittels kettenradseitigen Führungsborden, Führungsnuten in den Laschen, Laschenabstufungen oder magnetischen Kräften zwischen Kettenrädern und Spann- und Dämpfungselementen.

Bei den Spann- und Dämpfungselementen handelt es sich um Ringe aus einem elastischen Werkstoff, welcher zwischen der konzentrischen Form im ungespannten Zustand und der Form einer Cassinischen Kurve mit ellipsenähnlicher Gestalt im gespannten Zustand verformbar ist. Die Spann- und Dämpfungselemente sind bezüglich ihrer Geometrie und des Werkstoffes gleich.

Diese Spann- und Dämpfungselemente werden zwischen Lostrum und Lasttrum des Kettentriebes angeordnet und wirken auf beide Trume gleichzeitig.

Während des Betriebszustandes nehmen die Spann- und Dämpfungselemente selbsteinstellend zum Spannkraftminimum im Bereich der durch das Spannen erzeugten Lostrumauslenkung, zugleich der Bereich des größten diametralen Trumabstandes, mit Schlupf rollend eine spannungsminimale Lage ein.

Der Kettentrieb mit diesem Spann- und Dämpfungselement hat den Nachteil, dass es bei Kettentrieben mit asymmetrisch belasteten Trumen, wie sie beispielsweise bei Ölpumpenantrieben unter Beteiligung eines Kettenrades auf einer mit charakteristischer Wellenverlagerungsbahn im Grundlager und mit Wellendurchbiegung rotierenden Kurbelwelle vorkommt, unerwünschte Laufgeräusche, ähnlich Klingelgeräuschen, verursacht.

Bei derartigen Kettentrieben ist unter Hinzuziehung des Gelenkspiels der Kette die dem Grundlager entfernteste Laschenumlaufebene, nachfolgend als Entfernebene bezeichnet, gegenüber der grundlagerseitigen Laschenreihe, nachfolgend als Nahebene bezeichnet, mit den größten Wegänderungen belastet, weil das freie, aus dem Lager herausragende Wellenende, auf dem das Kettenrad angeordnet ist, dem größten absoluten exzentrischen Ausschlag bei exzentrischer Verlagerung der Wellenbahn im Grundlager oder bei Durchbiegung der Welle unterliegt.

Dieser exzentrische Ausschlag überträgt sich vom Polygon des Kettenrades auf die Kette und erregt bei stets gleicher Geschwindigkeit von Entfernebene und Nahebene diese zu Schwingungen in der Form, dass die Entfernebene einer größeren schwingungserregenden Amplitude unterliegt als die Nahebene.

Das auf der Nahebene angeordnete Spann- und Dämpfungselement dämpft die kleineren Amplituden bereits mit kleinerer Formänderung bis zur Spielfreiheit der Kettengelenke in der Nahebene.

Das auf der Entfernebene angeordnete Spann- und Dämpfungselement dämpft auf der dem Grundlager entfernteren Laschenreihe bei gleicher Spann- und Dämpfungscharakteristik die verbleibenden Drehschwingungs- und Auslenkungsbeträge der größeren Amplituden seiner Laschenreihe bis zur Spielfreiheit auf seiner Seite.

Das Spann- und Dämpfungselement auf der Entfernebene legt stets größere Verformungswege zurück als des Spann- und Dämpfungselement auf der Nahebene. Ebenso unterliegt es größerem Schlupf und damit kleinerer Drehzahl.

Es liegt damit ein typisches Differentialproblem aus den Antriebsbedingungen (unterschiedliche Kurvenradien, unterschiedliche Drehzahlen, unterschiedliche Federwege) der rollenden Elemente vor.

Insbesondere beim Auslenken der Entfernebene erfolgt dieses Dämpfen nachlaufend zum Dämpfen auf der Nahebene, so dass es zu Freiflugphasen der Entfernebene je nach der Auslenkung des Lostrumes kommt.

Umgekehrt kommt es bei den komplexen Schwingungen ebenso zu Freiflugphasen in der Nahebene, während die Entfernebene im Kontakt zum Spann- und Dämpfungselement ist.

Die Freiflugphasen aus den unterschiedlichen Kurvenradien, unterschiedlichen Drehzahlen und unterschiedlichen Verformungswegen der beteiligten Spann- und Dämpfungselemente, in denen die Kontakte zwischen den Laschenreihen und den Spann- und Dämpfungselementen geöffnet und geschlossen werden, sind die technische Ursache für die unerwünschten Laufgeräusche der Spann- und Dämpfungselemente.

Ziel der Erfindung ist ein Kettentrieb mit verringerten Laufgeräuschen

Die technische Aufgabe der Erfindung besteht in der Schaffung eines Kettentriebes mit einer über ein treibendes Kettenrad und einem getriebenen Kettenrad geführten Endloskette und mit ringförmigem Spann- und Dämpfungselement, welcher die Freiflugphasen zwischen den Laschen in der Nahebene und in der Entfernebene und dem jeweiligen Spann- und Dämpfungselement vermeidet.

Diese technische Aufgabe wird durch die Merkmale des Anspruchs 1 gelöst.

Es wird von einem Kettentrieb mit ringförmigem, rotational elastischem selbsttätigen Spann- und Dämpfungselement im ungespannten Zustand ausgegangen, welches als elastisches Element im gespannten Zustand zwischen Lasttrum und Lostrum die ellipsenähnliche Form einer Cassinischen kurve annimmt.

Dieses Spann- und Dämpfungselement weist über den gesamten Ringumfang eine homogene Biegesteifigkeit und Dämpfung auf.

Die Breite des Spann- und Dämpfungselementes ist gleich der Summe der Breiten von Innenlasche und Außenlasche einschließlich des Spiels zwischen den Laschen.

Der Kontakt des Spann- und Dämpfungselementes erfolgt über seine Mantelfläche auf die Laschen von Lostrum und Lasttrum.

Das Spann- und Dämpfungselement ist mit Führungsspiel mittels kettenradseitigen Führungsborden, Führungsnuten in den Laschen, Laschenabstufungen in der dem Lager der Kettenradwellen abgewandten Umlaufebene der Laschen, der Entferntebene, asymmetrisch angeordnet.

Die asymmetrische Anordnung des Spann- und Dämpfungselementes bedeutet, dass vor- und nachlaufendes Spannen und Dämpfen wegen der Abwesenheit eines weiteren Spann- und Dämpfungselementes ausgeschlossen ist.

Damit entfallen die Freiflugphasen eines vor- oder nachlaufenden Spann- und Dämpfungselementes als Ursache für die unerwünschten Laufgeräusche der Spann- und Dämpfungselemente.

In Präzisierung der bisher im Stand der Technik vorherrschenden Betrachtung, Vorrichtungen oder Elemente zum Spannen und Dämpfen von Kettentrieben stets längs, mittig und symmetrisch gegen die jeweiligen Trume zu richten, um Kippkräfte zu vermeiden, beruht die Erfindung auf dem Gedanken, die bei der Anordnung eines Kettenrades auf einem freien Wellenende real asymmetrisch erregten Schwingungen in der Kettenzugkraftrichtung durch ein asymmetrisch angeordnetes Spann- und Dämpfungselemente elastisch auszuspannen und zu dämpfen.

Da das vom Spann- und Dämpfungselement im Kettentrieb erreichbare Spannkraftminimum im Lostrumbogen und damit stets außerhalb des Kopfkreises des Kettenrades liegt,

kann das Spann- und Dämpfungselement, bezogen auf die Rotationsachsen der Kettenräder, sowohl zwischen diesen Rotationsachsen als auch um eine oder mehrere dieser Achsen herum angeordnet werden.

Das ermöglicht sehr kleine Achsabstände der Kettenräder und insgesamt eine günstige Variabilität bei der konstruktiven Gestaltung des Spann- und Dämpfungselementes und des Kettentriebes.

Die Erfindung eignet sich besonders für den Einsatz in Ölpumpenkettentrieben von Verbrennungsmotoren.

Die Erfindung soll nachstehend an einem Ausführungsbeispiel näher erläutert werden:

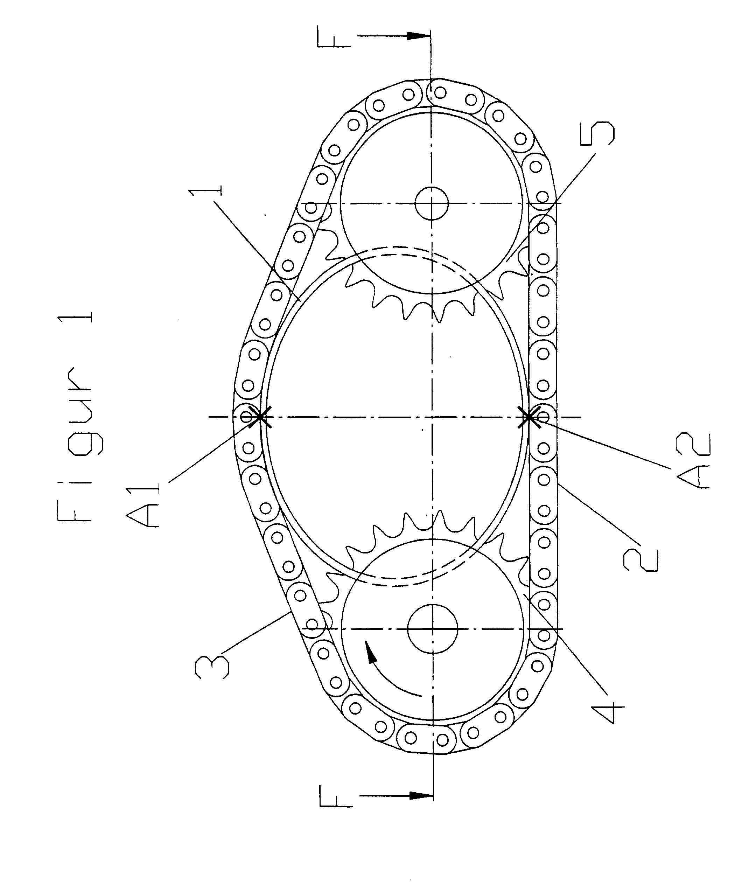

Figur 1 zeigt die Seitenansicht eines Kettentriebes mit einer über ein rechtsdrehendes treibendes Kettenrad und einem getriebenen Kettenrad geführten Kette mit geraden und gleich hohen Laschen und einem in Führungsborden geführten ellipsenähnlich verformten Spann- und Dämpfungselement mit zylindrischer Mantelfläche.

Figur 2 zeigt die Ansicht der Kettenräder des Kettentriebes gemäß Figur 1 von oben mit einem Kettenrad, welches einer Wellenverlagerung und Wellendurchbiegung unterliegt.

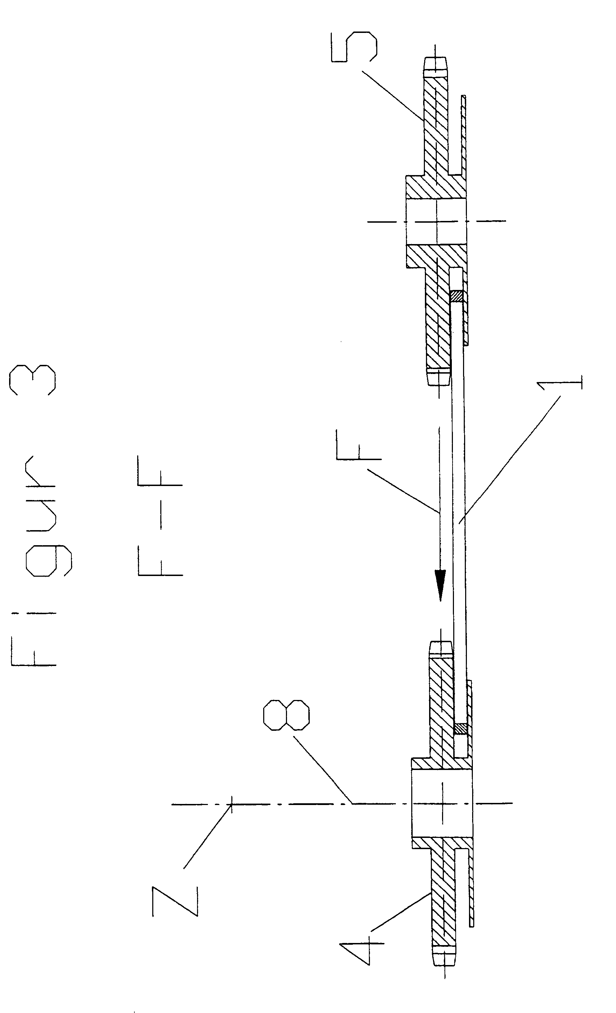

Figur 3 zeigt in Schnittdarstellung FF des Kettentriebes gemäß Figur 1 die asymmetrische Anordnung des Spann- und Dämpfungselementes neben den Kettenrädern (Kette nicht dargestellt).

Der beispielhafte Kettentrieb arbeitet in Tauchschmierung.

Das vor der jeweiligen Flankenebene der Kettenräder angeordnete Spann- und Dämpfungselement 1 ist elastisch ellipsenähnlich verformt und zwischen Lasttrum 2 und Lostrum 3 sowie zwischen den Achsen des treibenden Kettenrades 4 und des getriebenen Kettenrades 5 angeordnet. Die Zähnezahlen der Kettenräder sind gleich.

Die zylindrischen Mantelfläche des Spann- und Dämpfungselementes steht in Kontakt zu den Laschen der Kette.

Das Spann- und Dämpfungselement rollt bei bewegtem Kettentrieb mit Schlupf auf dem Laschenprofil der Kette und überträgt die Spannkraft auf die Trume.

Der Lasttrum zwischen dem treibenden Kettenrad und dem getriebenen Kettenrad verläuft gerade, während der Lostrum durch die Spannkraft des Spann- und Dämpfungselementes eine bogenförmige Auslenkung nach oben aufweist.

Der kleinste Abstand zwischen den auf der senkrechten Achse liegenden Punkten A1, A2 des Spann- und Dämpfungselementes ist größer als der Durchmesser des größten Kettenrades des Kettentriebes und kleiner als der Durchmesser des Spann- und Dämpfungselementes in der ursprünglichen konzentrischen Form.

Das Spann- und Dämpfungselement befinden sich dadurch im gespannten Zustand.

Die Spannkraft aus der Rückfederung von der ellipsenähnlich gespannten Form zur konzentrischen spannungsfreien Form bewirkt eine Auslenkung des Lostrums bis dessen Kettengelenke spielfrei sind.

In dieser Phase ist das Maximum der Lostrumauslenkung erreicht; der Abstand A1, A2 ist am größten. Es liegt das für das Spann- und Dämpfungselement im Kettentrieb erreichbare Spannkraftminimum vor. Dieses Spannkraftminimum liegt außerhalb des Kopfkreises des Kettenrades.

Da sich die mögliche Lostrumauslenkung in Richtung beider Kettenräder geometrisch verringert, nimmt das nur wenige Gramm schwere Spann- und Dämpfungselement sehr schnell reagierend selbsteinstellend eine spannkraftminimale Lage in der Abstandsmitte zwischen den Kettenrädern ein.

Es entzieht sich dabei selbst in der Kette einen Freiheitsgrad und nimmt eine Lage in der Abstandsmitte der Kettenräder ein.

Das Spann- und Dämpfungselement hat jeweils eine Breite, welche gleich ist der Breite der Laschen, gemessen über die innere Lasche, das Spiel zwischen den Laschen und die äußere Lasche.

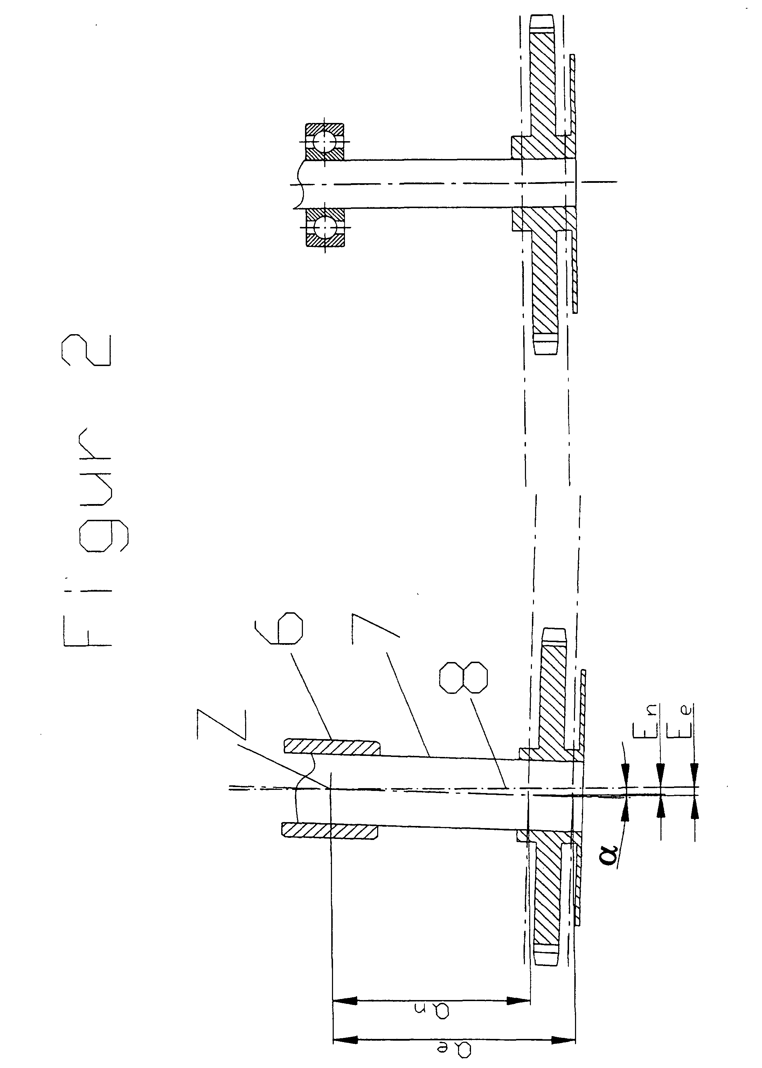

Aus Figur 2 ist die Wellenverlagerung eines im Grundlager 6 gelagerten freien Wellenendes 7 mit Kettenrad um den Winkel $\alpha$ des freien Wellenendes ersichtlich.

Diese Wellenverlagerung führt zu einer rotierenden Fluchtabweichung des Kettenrades. Da die Wellenverlagerung zyklisch und um die Normalachse 8 mit der Rotation des Wellenendes erfolgt, wird die laufende Kette sowohl zu Querschwingungen als zu Hubschwingungen angeregt.

Die Amplituden von Hubschwingungen und Querschwingungen sind, bezogen auf die Laschenumlaufebeben der Kette umso größer, je weiter diese vom Grundlager entfernt sind.

Im Abstand $a_e$ der Entferntebene sind die Amplituden größer als im Abstand $a_n$ der Nahebene.

Wird das Schwingungszentrum als Punkt Z in der Mitte des Grundlagers angenommen, so ergeben sich für die Exzentrizität auf der Normalachse für die Exzentrizität der Nahebene $E_n$ und die Exzentrizität der Entferntebene $E_e$ der Kette folgende Beziehung:

$$E_n = a_n \sin \alpha < a_e \sin \alpha = E_e.$$

Das Spann- und Dämpfungselement ist vor den Flankenebenen der Kettenräder in der Entferntebene der Kette angeordnet, kontaktiert die Kette asymmetrisch und wirkt damit gegen die größeren Amplituden der Schwingungen.

Das Spann- und Dämpfungselement auf der Entferntebene ist bezüglich seines Spann- und Dämpfungsverhaltens so dimensioniert, dass es die Kette allein über die miteinander vernieteten Außenlaschen permanent spielfrei spannt.

Ein weiterer, in der Nahebene der Kette angeordneter Ring, welcher hinsichtlich der Freiflugphasen und des damit verbundenen Laufgeräusches ein überbestimmtes und schädliches Objekt wäre, ist nicht notwendig.

Die Kette wird durch den asymmetrischen Spannkrafteintrag nicht verdreht, sondern in Verbindung mit der Kettenfliehkraft im Lostrumbogen bis zur Spielfreiheit ausgelenkt.

Im Lasttrum führt die gegenüber der Spannkraft sehr große Kettenzugkraft ihrerseits zu einem symmetrischen Eingriff der Kette in beide Kettenräder.

**Patentansprüche**

1. Kettentrieb mit einer über ein treibendes Kettenrad (4) und ein getriebenes Kettenrad (5) oder mehrere getriebene Kettenräder geführten Endloskette und einem ringförmigem Spann- und Dämpfungselement (1), mit einer Zylindrischen Mantelfläche, welches als rotational zwischen der Form eines konzentrischen Ringes und einer ellipsenähnlichen Form einer Cassinischen Kurve elastisch verformbares Element zwischen Lasttrum (2) und Lostrum (3) im Lostrumbogen selbsthaltend angeordnet über den Laschenkontakt auf beide Trume gleichzeitig wirkt,

   **dadurch gekennzeichnet, dass** das Spann- und Dämpfungselement (1) asymmetrisch zur Richtung der Zugkraft F der Kette in der einem Lager der Kettenradwellen abgewandten Ebene der Laschen, der sogenannten Entferntebene, des Kettentriebes angeordnet ist, wobei die Zylindrische Mantelfläche des Spann- und Dämpfungselementes in Kontakt mit den Laschen der Kette steht.

2. Kettentrieb nach Anspruch 1, **gekennzeichnet durch** die Anordnung des Spann- und Dämpfungselementes zwischen den Achsen der Kettenräder.

3. Kettentrieb nach den Anspruch 1, **gekennzeichnet durch** die Anordnung des Spann- und Dämpfungselementes um eine oder mehrere Achsen der Kettenräder herum.

**Claims**

1. Chain drive with an endless chain, guided onto a driving sprocket (4) and a driven sprocket (5) or several driven sprockets, and with a ring shaped tensioning and damping element (1) with a cylindrical mantle surface, that effects as a rotational, between the shape of a concentric ring and a shape of a Cassinic Curve similar an ellipse, elastic ductile element arranged between loaded strand (2) and non-loaded strand (3) self-holding in the bend of the non-loaded strand via the contact to the link plates to both strands the same time, **characterised in that** the tensioning and damping element (1) is arranged asymmetrical to the direction of the tractive force F of the chain in the plane of the link plates, which is distant from the bearing of the sprocket shaft, the called distant plane, while the cylindrical mantle surface of the tensioning and damping element stays in contact with the link plates of the chain.

2. Chain drive according to claim 1, **characterised in that** the arrangement of the tensioning and damping element is between the shafts of the sprockets.

3. Chain drive according to claim 1, **characterised in that** the arrangement of the tensioning and damping element is around one or more shafts of the sprockets.

**Revendications**

1. Entraînement à chaîne avec une chaîne sans fin menée par une roue à chaîne entraînante (4) et une roue à chaîne entraînée (5) ou plusieurs roues à chaîne entraînées et avec un élément de tension et d'amortissement annulaire (1) à surface de gaine cylindrique, qui placé en tant qu'élément déformable élastiquement de façon rotative entre la forme d'un anneau concentrique et une forme semblable à une ellipse Cassinenne entre le brin de charge (2) et le brin lâche (3) dans l'arc de brin lâche à auto-maintien, agit en même temps sur les deux brins par contact d'éclisse, **caractérisé en ce que** l'élément de serrage et d'amortissement (1) est placé asymétriquement par rapport à la direction de la force de traction F de la chaîne dans le niveau opposé à un palier d'arbre de roue de chaîne, le soi-disant niveau d'éloignement, de l'entraînement de chaîne, la surface de gaine cylindrique de l'élément de serrage et d'amortissement étant en contact avec les éclisses de la chaîne.

2. Entraînement à chaîne selon revendication 1 **caractérisé par** la disposition de l'élément de serrage et d'amortissement entre les axes des roues de chaîne.

3. Entraînement à chaîne selon revendication 1 **caractérisé par** la disposition de l'élément de serrage et d'amortissement autour d'un ou de plusieurs axes des roues de chaîne.

Figur 1

EP 1 335 152 B1

# Figur 2

EP 1 335 152 B1

EP 1 335 152 B1

# Figur 3

## F-F